# FASCICULE DE BREVET EUROPEEN

(11) **EP 3 628 593 B1**
(45) Date de publication et mention de la délivrance du brevet: **06.01.2021**
(21) Numéro de dépôt: 19198482.2
(22) Date de dépôt: 19.09.2019
(51) Int. Cl.: B64C 27/24, B64C 27/26, B64C 39/08, B64C 29/00, B64D 27/24, B64C 27/20, B64C 39/04, B64D 27/02

(54) **AERONEF MULTIROTOR A MOTORISATION ELECTRIQUE OU HYBRIDE AVEC UNE CONSOMMATION ENERGETIQUE OPTIMISEE**
LUFTFAHRZEUG MIT MEHREREN ROTOREN UND ELEKTRO- ODER HYBRIDMOTOR MIT OPTIMIERTEM ENERGIEVERBRAUCH
MULTIROTOR AIRCRAFT WITH HYBRID OR ELECTRIC ENGINE WITH OPTIMISED ENERGY CONSUMPTION

(30) Priorité: 28.09.2018 FR 1801009
(43) Date de publication de la demande: 01.04.2020
(73) Titulaire: Airbus Helicopters, 13725 Marignane Cedex (FR)
(72) Inventeur: MERMOZ, Emmanuel, 13790 PEYNIER (FR); BALAYN, Frédéric, 13127 VITROLLES (FR); MARANINCHI, Xavier, 13170 LES PENNES MIRABEAU (FR)
(74) Mandataire: GPI Brevets

(56) Documents cités:
- EP-A1- 3 056 425
- WO-A1-2013/013084
- WO-A1-2018/103458
- CN-U- 205 221 105
- CN-U- 205 440 869
- CN-U- 206 231 620
- CN-U- 206 417 197
- US-A1- 2016 207 625
- US-B1- 10 081 436

## Description

La présente invention est du domaine des aéronefs multirotor et en particulier des aéronefs multirotor dédiés au transport de personnes et/ou de marchandises.

La présente invention concerne un aéronef multirotor à propulsion électrique ou hybride à redondance complète sur les fonctions de portance, de propulsion et de contrôle avec une consommation énergétique optimisée.

L'expression « aéronef multirotor » désigne par la suite et par commodité un aéronef muni d'au moins deux rotors formant respectivement une voilure tournante. Par exemple, un aéronef multirotor classiquement utilisé aujourd'hui peut comporter trois, quatre, six, huit rotors par exemple. Un aéronef multirotor peut réaliser parfois un décollage et un atterrissage sensiblement verticaux. Dans ce but, un ou plusieurs rotors de cet aéronef multirotor sont agencés de sorte que leurs disques rotor soient sensiblement horizontaux, à savoir que ces rotors ont un axe de rotation sensiblement vertical, afin de former respectivement une voilure tournante. Un aéronef multirotor est également désigné par le terme « drone » lorsqu'il est sans pilote embarqué, ni passager à son bord.

De nombreuses architectures d'aéronefs multirotor ont été étudiées, donnant lieu à de simples démonstrateurs ou bien a des mises en production pour les architectures jugées les plus intéressantes. De nouvelles architectures continuent d'être explorées aujourd'hui. Les dimensions de ces aéronefs multirotor peuvent varier de quelques centimètres à des dizaines de mètres, aussi bien en longueur, à savoir longitudinalement, qu'en envergure à savoir transversalement.

Dans le cadre de l'invention, un aéronef multirotor est utilisé principalement dans le cadre d'une mission de transport aérien à vocation commerciale ou parapublique et dans des zones environnementales sensibles, telles que des villes ou bien des parcs nationaux par exemple, et sur des distances limitées, typiquement entre 50 et 100 kilomètres (50 et 100 km). Ces transports aériens sont donc de courtes durées, de l'ordre de quelques dizaines de minutes à une heure par exemple, et permettent le transport de passager(s) et/ou de marchandise(s). De plus, leurs localisations en zones sensibles imposent des contraintes environnementales et sécuritaires importantes.

Ces différentes architectures peuvent combiner l'utilisation de rotors dédiés à la sustentation de l'aéronef, à savoir à axe de rotation sensiblement vertical, formant des voilures tournantes et de rotors dédiés à sa propulsion, à savoir à axe de rotation sensiblement horizontal, formant des hélices d'avancement ou bien utiliser les mêmes rotors pour la sustentation et la propulsion de l'aéronef. Ces différentes architectures peuvent également combiner l'utilisation de voilures fixes et de voilures tournantes.

Les architectures d'aéronefs dont la portance est assurée uniquement par des rotors consomment plus d'énergie en vol de translation que les architectures d'aéronefs dont la portance est assurée par une ou plusieurs voilures fixes en vol d'avancement et ont en conséquence une autonomie limitée. De plus, l'assiette de vol de ces aéronefs dont la portance est assurée uniquement par des rotors reste incertaine en vol de translation et peut conduire à un confort de vol médiocre.

Le document US 3089666 décrit par exemple un aéronef comportant une ou plusieurs ailes fixes et plusieurs rotors basculant autour d'un axe horizontal transversal. De la sorte, les rotors fournissent uniquement des forces aérodynamiques sensiblement verticales de portance lors des phases de décollage et d'atterrissage et des forces aérodynamiques sensiblement horizontales d'avancement lors de la phase de croisière.

Le document WO 2017/200609 décrit un aéronef comportant deux ailes et plusieurs rotors fixés à chacune de ces ailes. Les ailes portant les rotors basculent autour d'un axe horizontal transversal afin que les rotors génèrent une portance ou bien une force d'avancement selon la position des ailes.

Cependant, pour ces deux architectures, la phase de transition entre le vol horizontal et le vol vertical peut être complexe à gérer. De plus, le basculement des rotors ou bien de chaque aile implique un système mécanique également complexe et pouvant avoir une masse significative. Enfin, une panne d'un tel système mécanique de basculement peut rendre le pilotage de cet aéronef très difficile, voire dangereux.

On connaît aussi les documents WO 2018/075414, WO 2013/013084, US 10081436, WO 2012/012474, US 2012/0012692 et US 2016/0207625 décrivant des aéronefs multirotor comportant une ou plusieurs voilures fixes et plusieurs rotors, dont le disque rotor est sensiblement horizontal, susceptibles de générer une portance verticale ainsi qu'un ou plusieurs rotors, dont le disque rotor est sensiblement vertical, formant respectivement une hélice d'avancement horizontal.

Le document US 2016/0207625 décrit notamment un aéronef multirotor muni de deux ailes fixes de dimensions sensiblement identiques, quatre rotors respectivement positionnés à une extrémité libre de chaque aile et une ou plusieurs hélices d'avancement. Le document WO 2018/075414 décrit quant à lui un aéronef multirotor comportant douze rotors fixés en avant ou en arrière d'une aile, chaque rotor pouvant être incliné autour d'un axe horizontal longitudinal. Toutefois, la proximité des rotors avec une aile peut provoquer l'apparition d'une force aérodynamique dirigée vers la bas, désignée « déportance », et s'opposant à la sustentation de l'aéronef. Dès lors, la consommation d'énergie de l'aéronef est augmentée afin de compenser cette déportance, limitant en conséquence l'autonomie de l'aéronef.

Le document US 10081436 décrit un drone ayant un une implantation des ailes de type canard avec un corps central, une aile principale et une aile avant agencées dans un même plan, l'aile avant étant plus petite que l'aile principale. Deux supports longitudinaux relient l'aile avant à l'aile principale de part et d'autre du corps central. Plusieurs rotors sont disposés sur les supports longitudinaux, au dessus ou au dessous du plan formé par les ailes. Une hélice de propulsion est agencée à l'arrière du corps central.

Les documents, WO 2013/013084, WO 2012/012474 et US 2012/0012692 décrivent un aéronef multirotor muni de deux ailes de dimensions différentes et agencées dans deux plans parallèles distincts, huit rotors et deux hélices d'avancement positionnées derrière l'aile arrière. Les huit rotors forment deux séries de quatre rotors alignés longitudinalement. Ces deux séries de rotors sont positionnées entre les deux ailes et sensiblement dans le même plan que l'aile arrière. L'aéronef multirotor peut comporter un carénage de chaque série de rotors afin de limiter l'apparition d'une traînée aérodynamique. Cependant le flux d'air balayant l'aile arrière, qui est l'aile la plus grande et fournissant l'essentiel de la portance en vol de croisière, est perturbée après avoir balayé les rotors situés en amont de cette aile arrière. En conséquence, l'efficacité de cette aile arrière est réduite ce qui contribue alors à augmenter la consommation énergétique de l'aéronef et en conséquence à réduire son autonomie.

Enfin, l'arrière plan technologique de l'invention comporte également les documents EP 3056425, WO 2018/103458, CN 205440869, CN 206417197, CN 205221105 et CN 206231620.

En outre, quelle que soit l'architecture d'un aéronef multirotor, chaque rotor peut être entraîné directement par un moteur électrique ou bien par un moteur thermique ou encore par une chaîne de transmission mécanique entraînée elle-même par un ou plusieurs moteurs thermiques. Lorsque chaque rotor est entraîné par un moteur électrique, l'aéronef peut comporter une seule source d'énergie électrique comprenant par exemple un ou plusieurs dispositifs de stockage d'énergie électrique, telle qu'une batterie rechargeable ou non, ou bien une pile à combustible. L'aéronef peut aussi comporter une seconde source d'énergie électrique comprenant une génératrice électrique entraînée par un moteur thermique. De la sorte, l'aéronef multirotor peut être à motorisation uniquement électrique ou bien hybride, à savoir électrique et thermique.

Par ailleurs, selon l'architecture d'un tel aéronef multirotor, les conséquences d'une panne d'un rotor ou bien d'un moteur peuvent être importantes d'une part en termes de tenue et d'équilibre mécaniques de l'aéronef, et d'autre part en termes de sécurité du vol de l'aéronef. En effet, la panne d'un rotor provoque un déséquilibre dans les forces de portance et/ou d'avancement générées par l'ensemble des rotors de l'aéronef qui peut alors générer des contraintes mécaniques, notamment de flexion et/ou de torsion, dans la structure de l'aéronef.

De plus, une telle panne d'un rotor provoque une perte d'une force de portance et/ou d'avancement qui, si elle n'est pas compensée par les autres rotors, peut remettre en cause la sécurité du vol de l'aéronef, en rendant son pilotage difficile, et, par suite, son atterrissage complexe et dangereux.

La présente invention vise alors un aéronef multirotor à motorisation électrique ou hybride permettant de s'affranchir des limitations mentionnées ci-dessus, en ayant en particulier une consommation énergétique optimisée et en permettant de plus de pallier une perte de portance d'au moins un de ces rotors sans remettre en cause la sécurité du vol de l'aéronef, ni sa tenue mécanique structurelle.

Un objet selon la présente invention est un aéronef multirotor à motorisation électrique ou hybride, l'aéronef comportant :
- une structure longitudinale comportant deux extrémités longitudinales,
- un fuselage fixé à la structure longitudinale,
- un ensemble de surfaces portantes fixes muni de deux voilures fixes générant majoritairement la force aérodynamique de portance nécessaire à l'aéronef lors d'une phase de vol de croisière,
- un ensemble de surfaces portantes tournantes muni d'au moins six rotors générant majoritairement la force aérodynamique de portance nécessaire à l'aéronef lors des phases de décollage et d'atterrissage, les rotors étant agencés respectivement sur un support fixé à une voilure fixe et de sorte à ne pas être situés à la verticale d'une voilure fixe,
- un ensemble de propulsion comportant au moins une hélice d'avancement,
- une installation motrice comportant plusieurs moteurs électriques et au moins une source d'énergie électrique :
   ∘ un moteur électrique, entraînant respectivement un rotor ou bien une hélice d'avancement,
   ∘ au moins une source d'énergie électrique comportant un ou plusieurs dispositifs de stockage d'énergie électrique,
- un système de pilotage automatique de l'aéronef,
l'une desdites deux voilures fixes étant fixée rigidement à l'extrémité longitudinale avant de la structure longitudinale, la structure longitudinale s'étendant principalement selon un premier plan P1.

On entend par « structure longitudinale » une structure s'étendant essentiellement parallèlement à une direction longitudinale X de l'aéronef. Une telle direction longitudinale X s'étend de l'arrière de l'aéronef vers l'avant de l'aéronef. Par ailleurs, une direction d'élévation Z de l'aéronef s'étend de haut en bas perpendiculairement à la direction longitudinale X. Enfin, une direction transversale Y s'étend de gauche à droite perpendiculairement aux directions longitudinale X et d'élévation Z.

Le terme « longitudinal » est ainsi relatif à toute direction parallèle à la direction longitudinale X. De même, le terme « transversal » est relatif à toute direction parallèle à la direction transversale Y et l'expression « en élévation » ou le terme « verticale » sont relatifs à toute direction parallèle à la direction d'élévation Z.

Par ailleurs, la direction longitudinale X est l'axe de roulis de l'aéronef, la direction transversale Y est l'axe de tangage et la direction d'élévation Z est l'axe de lacet.

L'aéronef multirotor selon l'invention est remarquable en ce que l'autre desdites deux voilures fixes est fixée rigidement à l'extrémité longitudinale arrière de ladite structure longitudinale et en ce que les rotors sont agencés dans un même second plan P2 distinct du premier plan P1. De préférence, le second plan P2 est sensiblement parallèle au premier plan P1.

Le premier plan P1 est attaché ainsi à la structure longitudinale et est de préférence parallèle à la direction longitudinale X et à la direction transversale Y.

Le second plan P2 est formé par les intersections respectives des axes de rotation des rotors avec un plan moyen formé par leurs pales respectives. Les axes de rotation des rotors sont sensiblement parallèles à la direction d'élévation Z.

Le vol d'un aéronef multirotor comporte une phase de décollage, une phase de croisière et une phase d'atterrissage. On entend par « phase de croisière » la phase de vol constituée par le vol de croisière selon une direction sensiblement horizontale et/ou par paliers horizontaux, à une vitesse d'avancement sensiblement horizontale et longitudinale. En phase de croisière, la vitesse d'avancement est par exemple supérieure ou égale à une vitesse d'avancement prédéterminée.

A partir de cette vitesse d'avancement prédéterminée, l'ensemble des surfaces portantes fixes génère avantageusement l'essentiel, voire la totalité de la portance nécessaire à l'aéronef. Par exemple, l'ensemble des surfaces portantes fixes génère 80 à 100% de la portance nécessaire à l'aéronef lors de cette phase de croisière.

Lors de l'avancement de l'aéronef avec une vitesse d'avancement inférieure à la vitesse d'avancement prédéterminée, la portance nécessaire à l'aéronef est générée conjointement par l'ensemble des surfaces portantes fixes et l'ensemble des surfaces portantes tournantes.

En outre, lors des vols verticaux, à savoir les phases de décollage et d'atterrissage, et des vols à faibles vitesses d'avancement, l'ensemble des surfaces portantes fixes génère une faible portance. Dès lors, l'ensemble des surfaces portantes tournantes génère la majorité de la portance nécessaire à l'aéronef.

De la sorte, l'aéronef multirotor selon l'invention présente avantageusement une redondance sur les fonctions de portance.

La structure longitudinale peut être est munie de deux poutres longitudinales s'étendant principalement selon le premier plan P1 et sur lesquelles est fixée directement au moins une voilure fixe. Les deux poutres longitudinales sont droites et agencées de façon coplanaire. Le premier plan P1 est alors formé plus précisément par les lignes moyennes de ces poutres longitudinales. Les deux poutres longitudinales sont par exemple métalliques, faites typiquement en acier ou bien en alliage d'aluminium, ou bien réalisées en matériaux composites, tels que la fibre de carbone.

La structure longitudinale peut comporter un caisson rigide, en lieu et place des deux poutres longitudinales précédemment évoquées. Ce caisson rigide est de forme majoritairement plane et s'étend selon le premier plan P1, au moins une voilure fixe étant fixée directement au caisson rigide. La section transversale de ce caisson rigide peut être par exemple rectangulaire ou elliptique. Ce caisson rigide est par exemple réalisé de façon monobloc en matériaux composites.

Selon un premier mode de réalisation de l'aéronef multirotor selon l'invention, les deux voilures fixes sont fixées rigidement à la structure longitudinale et sensiblement selon le premier plan P1. De la sorte, les deux voilures fixes sont fixées typiquement dans le prolongement des deux poutres longitudinales ou bien du caisson rigide susceptible de former la structure longitudinale.

Les deux voilures fixes sont également fixées, de préférence, directement aux poutres longitudinales ou bien au caisson rigide. De la sorte, une armature centrale rigide est formée par la structure longitudinale et les deux voilures fixes. Cette armature centrale rigide peut ainsi être formée par exemple par les deux poutres longitudinales et les deux voilures fixes ou bien par le caisson rigide et les deux voilures fixes.

Les deux voilures fixes sont ainsi agencées sensiblement dans le premier plan P1 ou bien très proches de ce premier plan P1 et, de la sorte, décalées verticalement par rapport aux rotors et au second plan P2. Toutefois, les deux voilures fixes peuvent avoir des orientations différentes afin d'améliorer le comportement aérodynamique de l'aéronef. Les deux voilures fixes ne sont alors pas parallèles entre elles, ni au premier plan P1.

Selon un second mode de réalisation de l'aéronef multirotor selon l'invention, une voilure fixe est décalée verticalement, de préférence vers le bas, par rapport à l'autre voilure fixe et par rapport au premier plan P1. Les deux voilures fixes sont ainsi décalées verticalement par rapport aux rotors de sorte que les deux voilures fixes ne sont pas agencées dans le second plan P2.

De préférence, une voilure fixe avant, située longitudinalement à l'avant de la structure longitudinale de l'aéronef multirotor selon l'invention, est décalée verticalement vers le bas par rapport à une voilure fixe arrière, située longitudinalement à l'arrière de la structure longitudinale de l'aéronef multirotor, et par rapport au premier plan P1.

La structure longitudinale comporte alors deux poutres de liaison inclinées par rapport au premier plan P1 et cette voilure fixe décalée verticalement est fixée à une première extrémité de chacune des poutres de liaison. Les deux poutres de liaison contribuent avec les voilures fixes et le reste de la structure longitudinale à former une armature centrale rigide.

Par exemple, les deux poutres de liaison sont fixées rigidement à un caisson rigide que comporte la structure longitudinale au niveau d'une seconde extrémité de chaque poutre de liaison. Cette seconde extrémité de chaque poutre de liaison est opposée à la voilure fixe fixée à cette poutre de liaison. Les deux poutres de liaison et le caisson rigide forment avec les voilures fixes l'armature centrale rigide.

Selon un autre exemple, les deux poutres de liaison sont fixées rigidement respectivement à une des deux poutres longitudinales que comporte la structure longitudinale au niveau de la seconde extrémité de chaque poutre de liaison. Les deux poutres de liaison et les deux poutres longitudinales forment avec les voilures fixes l'armature centrale rigide.

De plus, dans ce cas, la structure longitudinale peut également comporter une poutre transversale fixée rigidement aux deux poutres longitudinales, par exemple au niveau de la seconde extrémité des poutres de liaison. Cette poutre transversale relie les deux poutres longitudinales et contribue à la rigidité de l'armature centrale rigide.

Les deux poutres de liaison et, le cas échéant, la poutre transversale sont par exemple métalliques ou bien réalisées en matériaux composites.

En outre, une poutre longitudinale et une poutre de liaison peuvent constituer une seule et même pièce. Un angle vif peut être présent à la jonction entre une poutre longitudinale et une poutre de liaison. Des rayons de raccordement peuvent également permettre de relier une poutre longitudinale et une poutre de liaison.

Quel que soit le mode de réalisation de l'invention, les deux voilures fixes formant l'ensemble des surfaces portantes fixes sont positionnées aux extrémités longitudinales de la structure longitudinale afin de limiter l'encombrement longitudinal de l'aéronef.

De plus, quel que soit le mode de réalisation, les rotors formant l'ensemble des surfaces portantes tournantes sont décalés horizontalement et verticalement par rapport à la structure longitudinale et aux voilures fixes. Tout d'abord, un décalage dans le plan horizontal, à savoir perpendiculairement à la direction en élévation Z, entre les rotors et les voilures fixes permet que chaque rotor ne soit pas situé au-dessus d'une voilure fixe et ne provoque donc avantageusement pas l'apparition d'une déportance sur les voilures fixes de l'aéronef.

Ensuite, un décalage dans le plan vertical, à savoir parallèlement à la direction en élévation Z, entre les rotors et les voilures fixes permet avantageusement d'optimiser la génération de la portance par chacune de ces voilures fixes. En effet, le flux d'air balayant les deux voilures fixes situées dans le premier plan P1, en particulier la voilure fixe arrière, n'est pas ou peu perturbé par les rotors qui sont situés en amont de ces voilures fixes, dans le second plan P2 distinct du premier plan P1, permettant donc de générer de façon optimale une portance.

De plus, dans le cadre du second mode de réalisation de l'aéronef multirotor selon l'invention, le décalage vertical entre les deux voilures fixes améliore également l'efficacité aérodynamique de chaque voilure fixe, quelle que soit l'incidence de l'aéronef.

En outre, lors de la phase de croisière, la vitesse de rotation des rotors peut être réduite, voire arrêtée lorsque la portance générée par les voilures fixes est suffisante pour le vol de l'aéronef. En conséquence, l'aéronef multirotor selon l'invention effectue avantageusement la phase de croisière en optimisant la consommation d'énergie.

La présence de l'armature centrale rigide assure une tenue mécanique et une rigidité importante de l'aéronef, permettant avantageusement de reprendre l'ensemble des forces et moments en provenance des voilures fixes et des rotors. De plus, en cas de perte de portance d'au moins un rotor assurant la sustentation de l'aéronef multirotor selon l'invention, les forces aérodynamiques de portance générées par les rotors restant fonctionnels seront déséquilibrées et provoqueront des contraintes mécaniques additionnelles sur l'aéronef multirotor et notamment sur la structure longitudinale. Avantageusement, la présence de cette armature centrale rigide permet d'absorber ces contraintes mécaniques et notamment la torsion pouvant apparaître.

En cas de perte de portance d'au moins un rotor, les autres rotors restant fonctionnels peuvent assurer une augmentation de la portance respectivement générée afin de compenser cette perte de portance d'au moins un rotor, ce qui peut contribuer à augmenter les contraintes mécaniques susceptibles d'apparaître sur l'aéronef multirotor et notamment sur la structure longitudinale. L'armature centrale rigide fournit à l'aéronef multirotor une tenue mécanique suffisante pour résister à ces contraintes mécaniques supplémentaires.

Le fuselage de l'aéronef multirotor selon l'invention permet le transport d'un ou de plusieurs passagers et/ou de marchandises. Le fuselage est fixé à la structure longitudinale, par exemple par l'intermédiaire de bielles. Le fuselage peut ainsi être facilement remplacé en fonction du besoin, par exemple pour passer d'un transport uniquement de passagers à un transport de marchandises.

Le fuselage peut aussi comporter un train d'atterrissage, par exemple un train d'atterrissage à roues ou bien un train d'atterrissage à patins.

Par ailleurs, les rotors sont agencés de sorte que deux rotors adjacents sont contrarotatifs. De la sorte, le ou les rotors les plus proches d'un autre rotor ont un sens de rotation opposé au sens de rotation de cet autre rotor. En conséquence, les effets inertiels consécutifs aux rotations respectives de ces rotors se compensent sans nécessiter l'utilisation dans ce cas d'un dispositif anticouple tel qu'utilisé traditionnellement sur les hélicoptères.

L'ensemble des surfaces portantes tournantes comporte avantageusement au moins six rotors. L'utilisation d'un nombre important de rotors permet de limiter la puissance installée pour l'entraînement en rotation de chaque rotor et donc d'utiliser des moteurs, qu'ils soient électriques ou bien thermiques de puissance limitée et, par suite, de dimensions réduites. En particulier, de tels moteurs électriques peuvent avantageusement fonctionner uniquement avec un refroidissement par air, ce qui évite la présence d'une installation de refroidissement par liquide complexe, lourde et coûteuse. L'utilisation de moteurs électriques refroidis par air permet aussi d'améliorer la fiabilité et la disponibilité de l'aéronef multirotor par rapport à un aéronef muni de moteurs électriques et d'une installation de refroidissement par liquide.

De plus, l'utilisation d'un nombre important de rotors permet avantageusement qu'une perte de portance d'un rotor, voire de deux rotors, soit compensée par les autres rotors restant fonctionnels, de sorte que cette perte de portance soit sans effet significatif sur le vol de l'aéronef. Une perte de portance d'un rotor est due à la panne du moteur entraînant ce rotor ou bien à la casse d'une pale du rotor par exemple.

Par exemple, l'ensemble des surfaces portantes tournantes comporte six rotors ou huit rotors.

Chaque rotor a un axe de rotation sensiblement vertical et comporte de préférence des pales dont le pas est fixe, la variation de la portance générée par chaque rotor étant obtenue en modifiant la vitesse de rotation de ce rotor. Chaque rotor comporte par exemple trois pales. Les rotors sont de préférence de mêmes dimensions. Toutefois, les dimensions de ces rotors peuvent être différentes afin d'optimiser notamment l'encombrement de l'aéronef multirotor selon l'invention.

Les rotors sont agencés respectivement sur un support fixé à une voilure fixe. De la sorte, plusieurs rotors sont liés à une même voilure fixe. Chaque rotor est de préférence agencé à l'extrémité d'un support fixé à une voilure fixe.

Chaque rotor de l'ensemble des surfaces portantes tournantes peut également comporter un carénage afin de limiter la création d'une force aérodynamique de traînée par ce rotor en vol d'avancement. Ce carénage permet également que la rotation des pales des rotors soit stoppée en vol d'avancement sans générer de perturbations vibratoires ou aérodynamiques.

Ce carénage assure également une protection des pales contre la projection d'objets ou le choc avec oiseaux par exemple.

Ce carénage peut aussi comporter une pluralité de cavités ou bien d'autres formes formant des systèmes d'absorption d'énergie acoustique afin de limiter la propagation de bruits gênant pour l'oreille humaine. De telles cavités ou de telles formes peuvent former par exemple des résonateurs de Helmholtz permettant en particulier de dissiper un phénomène de résonance potentiellement provoqué par le flux d'air généré par la rotation des pales des rotors et évitent ainsi la propagation de vibrations sonores désagréables pour l'oreille humaine.

Ce carénage est par exemple relié au support sur lequel est fixé le rotor par un ou plusieurs bras de liaison. De plus, le carénage de chaque rotor peut également générer avantageusement une portance lors de la phase de croisière s'ajoutant à la portance générée par l'ensemble des surfaces portantes fixes.

Les rotors de l'ensemble des surfaces portantes tournantes sont de préférence alignés sur deux lignes longitudinales, de sorte à limiter la traînée aérodynamique générée par ces rotors lors de la phase de croisière. Avantageusement, les supports sur lesquels sont fixés les rotors formant une ligne longitudinale sont également alignés longitudinalement afin de limiter également la de traînée générée par ces supports.

Les carénages des rotors formant une ligne longitudinale peuvent être en partie fusionnés afin de former un unique carénage.

De plus, le long de chaque ligne longitudinale de rotors, le sens de rotation d'un rotor est inversé entre deux rotors consécutifs de sorte que deux rotors adjacents d'une ligne longitudinale soient contrarotatifs.

Par ailleurs, les deux voilures fixes, agencées respectivement à chaque extrémité de la structure longitudinale peuvent être de mêmes dimensions. Cependant, les deux voilures fixes peuvent également être de dimensions différentes, Par exemple, la voilure fixe avant peut être de dimensions inférieures à la voilure fixe arrière. De la sorte, la voilure fixe avant assure essentiellement une stabilisation de l'aéronef lors de la phase de croisière alors que la voilure fixe arrière assure une part importante de la portance de l'aéronef lors de cette phase de croisière.

Au moins une voilure fixe peut comporter des volets mobiles installés au niveau du bord de fuite de la voilure fixe et de part et d'autre transversalement de la structure longitudinale. Ces volets sont pilotables afin d'assurer des mouvements de l'aéronef multirotor autour des axes de tangage et de roulis. De préférence, une voilure fixe comporte quatre volets mobiles, deux volets mobiles étant agencés de part et d'autre transversalement de la structure longitudinale, afin de pallier une défaillance, tel un blocage, d'un des volets mobiles et d'assurer de la sorte le contrôle de l'aéronef multirotor en toute sécurité.

De préférence, les deux voilures fixes comportent des volets mobiles agencés à leur bord de fuite.

La panne d'un volet peut aussi être compensée par une utilisation différentielle adaptée de la portance des rotors pilotés par exemple par le système de pilotage automatique de l'aéronef.

De la sorte, l'aéronef multirotor selon l'invention présente avantageusement une redondance sur les fonctions de contrôle du vol autour des axes de tangage et de roulis.

Par ailleurs, l'ensemble de propulsion de l'aéronef multirotor selon l'invention comporte au moins une hélice d'avancement dont l'axe de rotation est sensiblement horizontal et longitudinal. Cette au moins une hélice d'avancement est agencée par exemple au-dessus de cette voilure fixe. De préférence, au moins une hélice d'avancement est fixée au dessus de la voilure fixe arrière par l'intermédiaire d'un mât. L'axe de rotation de chaque hélice d'avancement est avantageusement décalé par rapport au premier plan P1 des voilures fixes et au second plan P2 des rotors afin qu'un flux d'air peu perturbé traverse chaque hélice d'avancement.

Chaque hélice d'avancement comporte par exemple trois pales à pas variable collectivement. De la sorte, la force d'avancement générée par chaque hélice peut être modulée d'une part par la variation de la vitesse de rotation de l'hélice d'avancement et d'autre part par la variation du pas collectif des pales.

L'ensemble de propulsion peut comporter deux hélices d'avancement fixées à la structure longitudinale afin de fournir une meilleure tenue mécanique à l'aéronef. Chaque hélice d'avancement est par exemple alignée avec une poutre longitudinale de cette structure longitudinale. Une poussée différentielle des deux hélices permet avantageusement de permettre un mouvement en lacet lors du vol d'avancement.

De la sorte, l'aéronef multirotor selon l'invention présente avantageusement une redondance sur les fonctions de propulsion.

Au moins une voilure fixe peut également comporter au moins une dérive verticale afin d'assurer une stabilisation autour de l'axe de lacet de l'aéronef multirotor selon l'invention. Cette au moins une dérive verticale peut aussi comporter au moins un volet mobile afin de piloter un mouvement en lacet de l'aéronef multirotor. Cette dérive verticale comportant au moins un volet mobile permet aussi de pallier une panne d'une hélice d'avancement lorsque l'aéronef multirotor comporte au moins deux hélices d'avancement pour le pilotage de l'aéronef multirotor autour de son axe de lacet.

De la sorte, l'aéronef multirotor selon l'invention présente avantageusement une redondance sur les fonctions de contrôle du vol autour de son axe de lacet.

Chaque dérive verticale est agencée par exemple à une extrémité libre d'une voilure fixe, de préférence la voilure fixe arrière, et est par exemple orientée vers le bas afin de limiter le couplage aérodynamique roulis/lacet. Une voilure fixe peut comporter deux dérives verticales agencées respectivement à chacune de ses extrémités libres.

Une dérive verticale peut également être formée par un mât supportant une hélice d'avancement.

L'installation motrice comporte plusieurs moteurs électriques et au moins une source d'énergie électrique. Un moteur électrique entraîne respectivement un rotor ou bien une hélice d'avancement. Chaque moteur électrique est de préférence refroidi par air.

Une source d'énergie électrique comporte un ou plusieurs dispositifs de stockage d'énergie électrique. Un dispositif de stockage d'énergie électrique est par exemple une batterie rechargeable ou bien une pile à combustible. Cette source d'énergie électrique peut alors comporter un dispositif de gestion de l'énergie électrique, en pilotant notamment la décharge des dispositifs de stockage d'énergie électrique.

Une source d'énergie électrique peut également comporter un générateur électrique et un moteur thermique entraînant le générateur électrique de sorte à générer une énergie électrique. De la sorte, l'installation motrice de l'aéronef multirotor selon l'invention est dite « hybride ». L'énergie électrique générée par le générateur électrique peut alors être utilisée directement pour alimenter les moteurs électriques ou bien afin de recharger électriquement chaque dispositif de stockage d'énergie électrique. Cette source d'énergie électrique peut comporter un dispositif de gestion de l'énergie électrique, en pilotant notamment la charge et la décharge des dispositifs de stockage d'énergie électrique.

En outre, l'installation motrice peut comporter au moins deux sources d'énergie électrique distinctes et indépendantes alimentant chaque moteur électrique. Ces au moins deux sources d'énergie électrique sont alors de préférence séparées et isolées l'une de l'autre de sorte qu'un incident, tel qu'un emballement thermique ou un dégazage, se produisant sur une des sources d'énergie électrique ne se propage pas à l'autre source d'énergie électrique. Ces au moins deux sources d'énergie électrique sont par exemple séparées par une paroi de séparation ou bien sont agencées respectivement dans un caisson de confinement dédié.

Chaque source d'énergie électrique peut être positionnée dans un compartiment dédié du fuselage de l'aéronef multirotor, par exemple à l'arrière du fuselage, ou bien dans la structure longitudinale.

Le système de pilotage automatique est muni de capteurs et permet de commander les rotors, chaque hélice d'avancement et les volets mobiles afin d'assurer, de façon autonome, le pilotage de l'aéronef multirotor selon l'invention. Toutefois, l'aéronef multirotor selon l'invention peut comporter des moyens de commande de sorte qu'un occupant de l'aéronef multirotor puisse piloter directement l'aéronef multirotor.

L'invention et ses avantages apparaîtront avec plus de détails dans le cadre de la description qui suit avec des exemples donnés à titre illustratif en référence aux figures annexées qui représentent :
- les figures 1 à 5, un premier mode de réalisation d'un aéronef multirotor,
- les figures 6 et 7, un second mode de réalisation d'un aéronef multirotor,
- la figure 8, une vue de détail d'une partie du fuselage de l'aéronef et de ses sources d'énergie électrique.

Les éléments présents dans plusieurs figures distinctes sont affectés d'une seule et même référence.

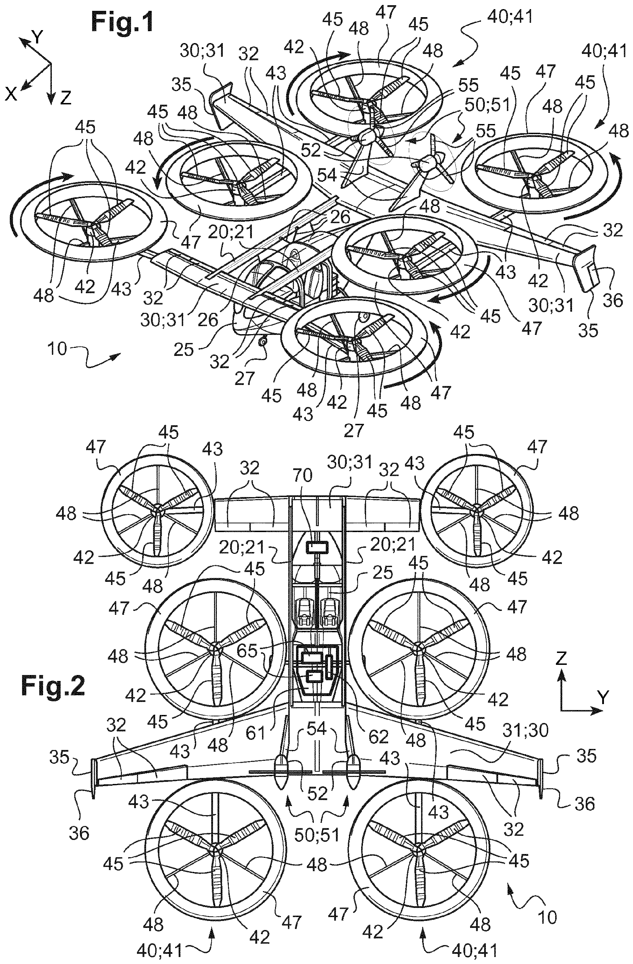

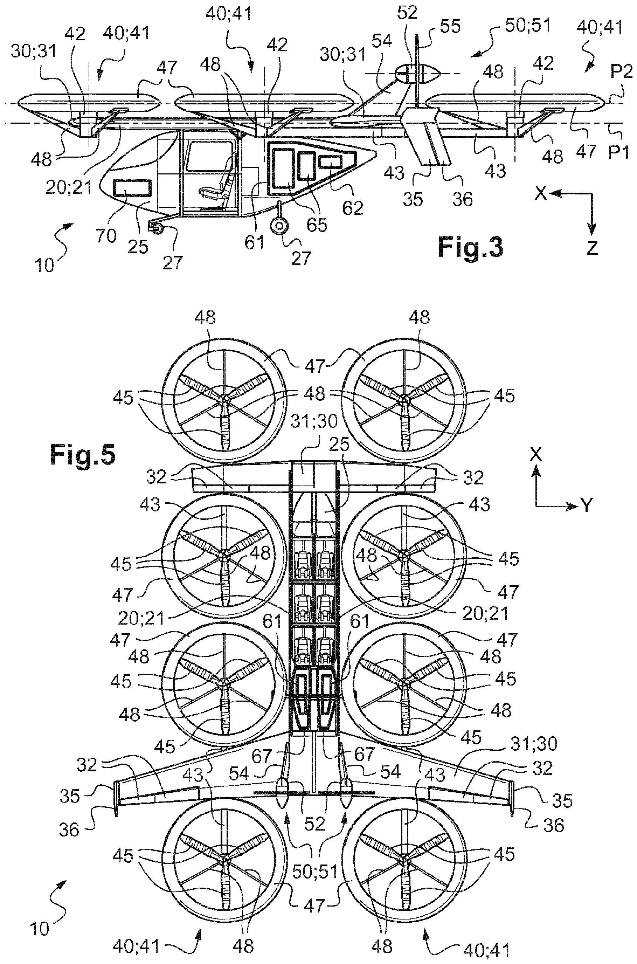

Un premier mode de réalisation d'un aéronef 10 multirotor selon l'invention comporte trois variantes. Une première variante est représentée sur les figures 1 à 3, selon une vue en perspective sur la figure 1, selon une vue de dessus sur la figure 2 et selon une vue de côté sur la figure 3.

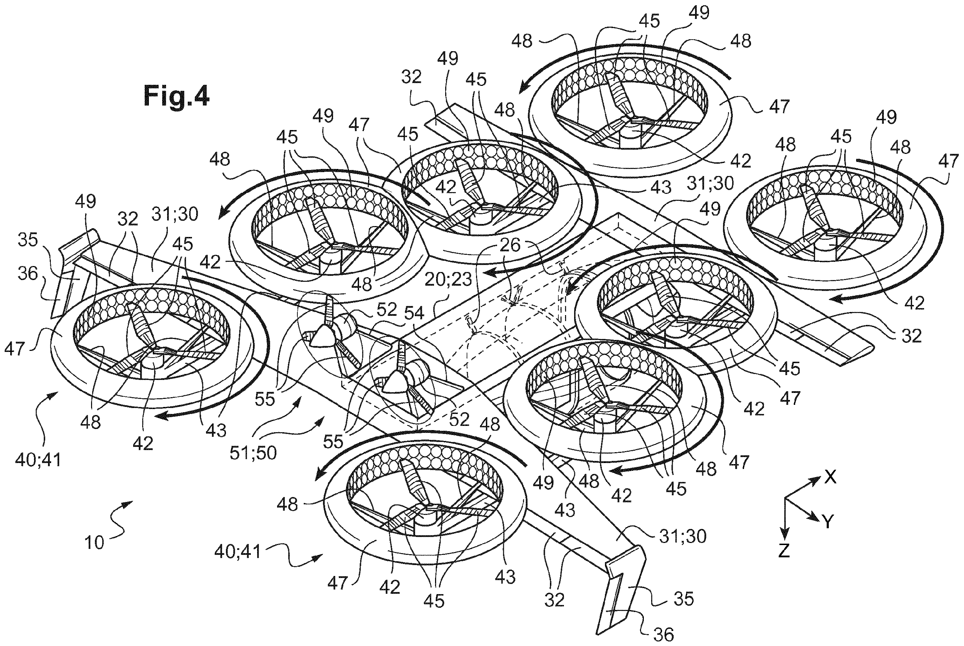

Une deuxième variante est représentée sur la figure 4 selon une vue en perspective et une troisième variante est représentée sur la figure 5 selon une vue de dessus.

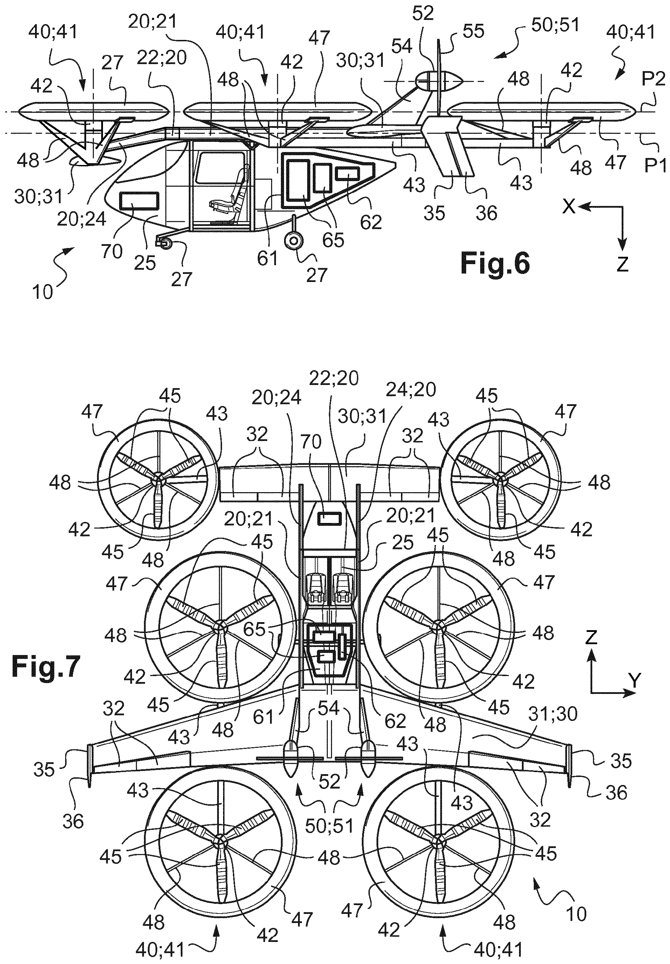

Un second mode de réalisation d'un aéronef 10 multirotor selon l'invention est représenté selon une vue de côté sur la figure 6 et selon une vue de dessus sur la figure 7.

Sur ces figures, un repère (X,Y,Z) est représenté. La direction longitudinale X s'étend de l'arrière de l'aéronef 10 vers l'avant de l'aéronef 10. La direction d'élévation Z s'étend de haut en bas perpendiculairement à la direction longitudinale X et la direction transversale Y s'étend de gauche à droite perpendiculairement aux directions longitudinale X et d'élévation Z.

De la sorte, la direction longitudinale X est l'axe de roulis de l'aéronef 10, la direction transversale Y est l'axe de tangage et la direction d'élévation Z est l'axe de lacet.

De façon commune à ces deux modes de réalisation, un aéronef 10 multirotor comporte :
- une structure longitudinale 20 s'étendant essentiellement parallèlement à la direction longitudinale X,
- un fuselage 25 fixé à la structure longitudinale 20 par l'intermédiaire de bielles 26,
- un ensemble de surfaces portantes fixes 30 muni de deux voilures fixes 31 reliées rigidement respectivement aux extrémités longitudinales de la structure longitudinale 20,
- un ensemble de surfaces portantes tournantes 40 muni d'au moins six rotors 41 agencés respectivement sur un support 43 fixé à une voilure fixe 31,
- un ensemble de propulsion 50 comportant deux hélices d'avancement 51,
- une installation motrice comportant plusieurs moteurs électriques 42,52 et au moins une source d'énergie électrique 61 :
   ∘ un moteur électrique 42,52 entraînant respectivement un rotor 41 ou bien une hélice d'avancement 51,
   ∘ au moins une source d'énergie électrique 61 comportant plusieurs dispositifs de stockage d'énergie électrique 65,
- un système de pilotage automatique 70 de l'aéronef 10.

Le fuselage 25 permet le transport d'un ou de plusieurs passagers et/ou de marchandises. Le fuselage 25 est fixé à la structure longitudinale 20 par l'intermédiaire de bielles 26. Le fuselage comporte un train d'atterrissage 27.

Selon le premier mode de réalisation de l'aéronef 10 multirotor, la structure longitudinale 20 est plane et s'étend selon un premier plan P1 parallèle aux directions longitudinale X et transversale Y. Les deux voilures fixes 31 sont fixées dans le prolongement de la structure longitudinale 20 et sont sensiblement selon le premier plan P1.

Selon la première et la troisième variantes de ce premier mode de réalisation de l'aéronef 10 multirotor, La structure longitudinale 20 est munie de deux poutres longitudinales 21 droites s'étendant selon le premier plan P1 et aux extrémités desquelles sont fixées rigidement les voilures fixes 31.

Selon la deuxième variante de ce premier mode de réalisation de l'aéronef 10 multirotor, la structure longitudinale 20 comporte un caisson rigide 23 monobloc et plat, s'étendant selon le premier plan P1. Les deux voilures fixes 31 sont fixées directement au caisson rigide 23.

De la sorte, pour ce premier mode de réalisation et quelle que soit la variante, une armature centrale rigide est formée par la structure longitudinale 20 et les deux voilures fixes 31. Selon la variante, cette armature centrale rigide est formée par les poutres longitudinales 21 et les deux voilures fixes 31 ou bien par le caisson rigide 23 et les deux voilures fixes 31.

Une voilure fixe avant 31, située longitudinalement à l'avant de la structure longitudinale 20, est de dimensions inférieures à une voilure fixe arrière 31, située longitudinalement à l'arrière de la structure longitudinale 20. La voilure fixe arrière 31 assure ainsi une part importante de la portance de l'aéronef 10 lors d'une phase de vol de croisière alors que la voilure fixe avant 31 assure essentiellement une stabilisation de l'aéronef 10 multirotor.

Toutefois, les deux voilures fixes 31 peuvent être de mêmes dimensions.

Les deux voilures fixes 31 comportent chacune quatre volets mobiles 32 installés au niveau du bord de fuite de chaque voilure fixe 31, deux volets mobiles 32 étant agencés de part et d'autre transversalement de la structure longitudinale 20. Ces volets mobiles 32 sont pilotables afin d'assurer des mouvements de l'aéronef 10 multirotor autour de ses axes de tangage et de roulis.

La voilure fixe arrière 31 comporte également deux dérives verticales 35 agencées respectivement à chaque extrémité libre de cette voilure fixe arrière 31 et orientées vers le bas afin d'assurer une stabilisation autour de l'axe de lacet de l'aéronef 10 multirotor. Chaque dérive verticale 35 comporte un volet mobile 36 permettant de piloter un mouvement en lacet de l'aéronef 10 multirotor.

Les rotors 41 de l'ensemble des surfaces portantes tournantes 40 sont agencés dans un même second plan P2 distinct du premier plan P1 et parallèle à ce premier plan P1 comme représenté sur les figures 3 et 6. De plus, les deux voilures fixes 31 sont décalées verticalement par rapport aux rotors 41 et au second plan P2.

Chaque rotor 41 a un axe de rotation sensiblement vertical et comporte trois pales 45 à pas fixe. Le second plan P2 est formé par les intersections respectives des axes de rotation des rotors 41 avec un plan moyen formé par leurs pales 45. Chaque rotor 41 est entraîné en rotation par un moteur électrique 42 refroidi par air. Il est à noter que le nombre de pales n'est pas limitatif.

Les rotors 41 sont agencés de sorte à être décalés verticalement par rapport aux voilures fixes 31, à savoir que les deux voilures fixes 31 ne sont pas positionnées dans le second plan P2 formé par les rotors 41.

Les rotors 41 sont également agencés de sorte à être décalés horizontalement par rapport aux voilures fixes 31, à savoir que chacun des rotors 41 ne se trouve pas à la verticale, c'est-à-dire au dessus ou au dessous, d'une voilure fixe 31.

Selon la première variante de ce premier mode de réalisation, l'ensemble des surfaces portantes tournantes 40 comporte six rotors 41. Deux rotors 41 sont fixés à la voilure fixe avant 31 et quatre rotors 41 sont fixés à la voilure fixe arrière 31 respectivement par l'intermédiaire de supports 43.

Selon la deuxième variante et la troisième variante de ce premier mode de réalisation de l'aéronef 10, l'ensemble des surfaces portantes tournantes 40 comporte huit rotors 41. Quatre rotors 41 sont fixés à la voilure fixe avant 31 et quatre rotors 41 sont fixés à la voilure fixe arrière 31 respectivement par l'intermédiaire de supports 43.

Selon le second mode de réalisation de l'aéronef 10 multirotor, la structure longitudinale 20 comporte deux poutres longitudinales 21, deux poutres de liaison 24 et une poutre transversale 22. Chaque poutre de liaison 24 est fixée rigidement à une extrémité avant d'une poutre longitudinale 21. La poutre transversale 22 est fixée rigidement aux deux poutres longitudinales 21 et les relie à leur extrémité avant.

La voilure fixe arrière 31 est fixée rigidement à la structure longitudinale 20 selon le premier plan P1 alors que la voilure fixe avant 31 est fixée rigidement aux deux poutres de liaison 24 et est décalée verticalement vers le bas par rapport à la voilure fixe arrière 31 et au premier plan P1.

De la sorte, pour ce deuxième mode de réalisation, une armature centrale rigide est également formée par la structure longitudinale 20 et les deux voilures fixes 31, plus précisément par les poutres longitudinales 21, les poutres de liaisons 24, la poutre transversale 22 et les deux voilures fixes 31.

Ainsi, quel que soit le mode de réalisation de l'aéronef 10 multirotor, une armature centrale rigide fournit à l'aéronef 10 multirotor une tenue mécanique importante permettant notamment de résister aux contraintes mécaniques subies pendant le vol ainsi que celles consécutives à une perte de portance d'au moins un rotor 41.

Le décalage dans le plan vertical entre les rotors 41 et les voilures fixes 31 permet que le flux d'air balayant la voilure fixe arrière 31 pour la première variante du premier mode de réalisation et les deux voilures fixes 31 pour la deuxième et la troisième variante du premier mode de réalisation ainsi que pour le second mode de réalisation ne soit pas ou peu perturbé par les rotors 41 situés en amont de la voilure fixe arrière 31 et le cas échéant de la voilure fixe avant 31 lors d'un vol d'avancement et en particulier lors d'une phase de vol de croisière. De la sorte, la génération de la portance par chacune de ces voilures fixes 31 est avantageusement optimisée.

De plus, le décalage dans le plan horizontal entre les rotors 41 et les voilures fixes 31 permet que le flux d'air traversant chaque rotor 41 ne balaye pas une voilure fixe 31 et, en conséquence, ne provoque avantageusement pas l'apparition d'une éventuelle déportance sur les voilures fixes 31.

Chaque rotor 41 comporte également un carénage 47 permettant de limiter la traînée générée par ce rotor 41 lors d'un vol d'avancement de l'aéronef 10 multirotor, et en particulier en vol de croisière. Ce carénage 47 est fixé au support 43 par trois bras de liaison 48.

Pour la deuxième variante du premier mode de réalisation de l'aéronef 10 multirotor, le carénage 47 de chaque rotor 40 comporte une pluralité de cavités, comme représenté sur la figure 4, constituant des systèmes d'absorption d'énergie acoustique 49 afin de limiter la propagation de bruits gênant pour l'oreille humaine à partir de chaque rotor 40.

Pour la première variante du premier mode de réalisation représentée sur les figures 1 à 3 et pour le second mode de réalisation représenté sur les figures 6 et 7, les deux rotors 41 fixés à la voilure fixe avant 31 sont de dimensions diamétrales plus faibles que les dimensions des rotors 41 fixés à la voilure fixe arrière 31 afin d'optimiser l'encombrement de l'aéronef 10 multirotor.

Pour la deuxième et la troisième variante du premier mode de réalisation de l'aéronef 10, les huit rotors 41 de l'ensemble des surfaces portances tournantes 40 sont de mêmes dimensions. Toutefois, pour la deuxième variante représentée sur la figure 4, les rotors 41 fixés à la voilure fixe avant 31 et les rotors 41 fixés à la voilure fixe arrière 31 sont décalés transversalement afin de limiter l'encombrement longitudinale de l'aéronef 10 multirotor.

A contrario, pour la troisième variante représentée sur la figure 5, les rotors 41 sont alignés selon deux lignes longitudinales de sorte à limiter la traînée aérodynamique générée par ces rotors 41 lors d'un vol d'avancement. En conséquence, l'encombrement longitudinal de l'aéronef 10 multirotor selon la troisième variante est plus important que l'encombrement longitudinal de l'aéronef 10 selon la deuxième variante, mais les performances aérodynamiques de cette troisième variante sont améliorées par rapport à celles de la deuxième variante.

Par ailleurs, les rotors 41 sont agencés de sorte que deux rotors 41 adjacents longitudinalement sont contrarotatifs de sorte à limiter les effets inertiels consécutifs aux rotations respectives de ces rotors 41.

Les deux hélices d'avancement 51 de l'ensemble de propulsion 50 de l'aéronef 10 multirotor, quel que soit le mode de réalisation de l'aéronef 10 multirotor ont un axe de rotation sensiblement horizontal et sensiblement longitudinal quel que soit le mode de réalisation de cet aéronef 10 multirotor. Les deux hélices d'avancement 51 sont fixées à la structure longitudinale 20 et agencées au-dessus de la voilure fixe 31 arrière, l'axe de rotation de chaque hélice d'avancement 51 étant situé dans un plan distinct du premier plan P1 et du second plan P2. Chaque hélice d'avancement 51 est fixée à la structure longitudinale 20 par l'intermédiaire d'un mât 54 et est alignée avec une poutre longitudinale 21.

Chaque hélice d'avancement 51 comporte trois pales 55 à pas variable collectivement entraînées en rotation par un moteur électrique 52 refroidi par air. Il est à noter que le nombre de pales n'est pas limitatif.

L'installation motrice de l'aéronef 10 multirotor comporte les moteurs électriques 42,52 entraînant respectivement les rotors 41 et les hélices d'avancement 51 ainsi qu'une ou plusieurs sources d'énergie électrique agencées à l'arrière du fuselage 25.

Pour la première variante du premier mode de réalisation et pour le second mode de réalisation, l'installation motrice de l'aéronef 10 multirotor comporte une source d'énergie électrique 61 munie de deux dispositifs de stockage d'énergie électrique 65 et d'un dispositif de gestion 62 de l'énergie électrique comme représenté sur les figures 2 et 3. Le dispositif de gestion 62 pilote notamment la décharge des deux dispositifs de stockage d'énergie électrique 65. L'installation motrice de l'aéronef 10 multirotor selon ce premier mode de réalisation est purement électrique.

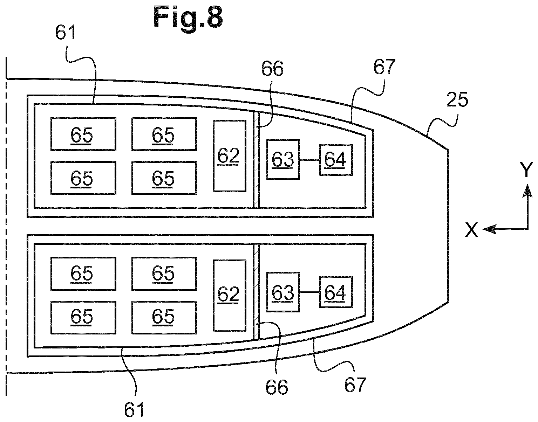

Pour la troisième variante du premier mode de réalisation, l'installation motrice de l'aéronef 10 multirotor comporte deux sources d'énergie électrique distinctes et indépendantes comme représenté sur les figures 5 et 8. Les deux sources d'énergie électrique 61 alimentent chaque moteur électrique 42,52 et sont de plus séparées et isolées l'une de l'autre de sorte qu'un incident sur une des deux sources d'énergie électrique 61 ne se propage pas à l'autre source d'énergie électrique 61. Dans ce but, les deux sources d'énergie électrique 61 sont agencées respectivement dans un caisson de confinement 67 dédié.

Chaque source d'énergie électrique 61 comporte quatre dispositifs de stockage d'énergie électrique 65 rechargeables, un dispositif de gestion 62 de l'énergie électrique ainsi qu'un moteur thermique 63 et un générateur électrique 64 entraîné par le moteur thermique 63 de sorte à générer une énergie électrique. Une paroi anti-feu 66 est agencée entre d'une part les dispositifs de stockage d'énergie électrique 65 rechargeables et le dispositif de gestion 62 et d'autre part le moteur thermique 63 et le générateur électrique 64 afin d'assurer une isolation en cas d'incendie par exemple dans la zone du moteur thermique 63. L'installation motrice de l'aéronef 10 multirotor selon ce troisième mode de réalisation est dite « hybride ». Le dispositif de gestion 62 pilote alors la charge et la décharge des dispositifs de stockage d'énergie électrique 65.

Le système de pilotage automatique 70, agencé par exemple dans une zone à l'avant du fuselage 25 de l'aéronef 10 multirotor est muni de capteurs (non représentés) et permet de commander les rotors 41, les hélices d'avancement 51 et les volets mobiles 32,36 afin d'assurer, de façon autonome, le pilotage de l'aéronef 10 multirotor.

Le vol de l'aéronef 10 multirotor comporte une phase de décollage et une phase d'atterrissage ainsi qu'une phase de croisière.

Lors des phases de décollage et d'atterrissage, la portance nécessaire à l'aéronef 10 multirotor est générée majoritairement par l'ensemble des surfaces portantes tournantes 40, à savoir les rotors 41.

Lors de la phase de croisière, la portance nécessaire à l'aéronef 10 multirotor est générée majoritairement par l'ensemble des surfaces portantes fixes 30, à savoir les deux voilures fixes 31.

Lors d'une phase de transition entre une phase de décollage ou d'atterrissage et une phase de croisière, l'ensemble des surfaces portantes fixes 30 et l'ensemble des surfaces portantes tournantes 40 génèrent conjointement la portance nécessaire à l'aéronef 10 multirotor.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Aéronef (10) multirotor comportant :
- une structure longitudinale (20) comportant deux extrémités longitudinales,
- un fuselage (25) fixé à ladite structure longitudinale (20),
- un ensemble de surfaces portantes fixes (30) muni de deux voilures fixes (31) générant majoritairement la portance nécessaire audit aéronef (10) lors d'une phase de croisière,
- un ensemble de surfaces portantes tournantes (40) muni d'au moins six rotors (41) générant majoritairement la portance nécessaire audit aéronef (10) lors des phases de décollage et d'atterrissage, lesdits rotors (41) étant agencés respectivement sur un support (43) fixé à une voilure fixe (31) et de sorte à ne pas être situés à la verticale d'une voilure fixe (31),
- un ensemble de propulsion (50) comportant au moins une hélice d'avancement (51)
- une installation motrice comportant plusieurs moteurs électriques (42,52) et au moins une source d'énergie électrique (61) :
∘ un moteur électrique (42,52) entraînant respectivement un rotor (41) ou bien une hélice d'avancement (51),
∘ au moins une source d'énergie électrique (61) comportant un ou plusieurs dispositifs de stockage d'énergie électrique (65),
- un système de pilotage automatique (70) dudit aéronef (10), l'une desdites deux voilures fixes (31) étant fixée rigidement à l'extrémité longitudinale avant de ladite structure longitudinale (20), , ladite structure longitudinale (20) s'étendant principalement selon un premier plan (P1), **caractérisé en ce que** l'autre desdites deux voilures fixes (31) est fixée rigidement à l'extrémité longitudinale arrière de ladite structure longitudinale et **en ce que** lesdits rotors (41) sont agencés dans un même second plan (P2) distinct dudit premier plan (P1).

2. Aéronef (10) selon la revendication 1,
**caractérisé en ce que** ladite structure longitudinale (20) comporte deux poutres longitudinales (21) s'étendant selon ledit premier plan (P1), au moins une voilure fixe (31) étant fixée auxdites poutres longitudinales (21).

3. Aéronef (10) selon la revendication 1,
**caractérisé en ce que** ladite structure longitudinale (20) comporte un caisson rigide (23) s'étendant selon ledit premier plan (P1), au moins une voilure fixe (31) étant fixée audit caisson rigide (23).

4. Aéronef (10) selon l'une quelconque des revendications 1 à 3,
**caractérisé en ce que** ladite structure longitudinale (20) comporte deux poutres de liaison (24) inclinées par rapport audit premier plan (P1) et une desdites deux voilures fixes (31) est fixée à une première extrémité desdites poutres de liaison (24) et décalée verticalement par rapport audit premier plan (P1).

5. Aéronef (10) selon la revendication 4,
**caractérisé en ce que**, lorsque ladite structure longitudinale (20) comporte deux poutres longitudinales (21), une poutre de liaison (24) est fixée rigidement à une poutre longitudinale (21) et ladite structure longitudinale (20) comporte une poutre transversale (22) reliant lesdites deux poutres longitudinales (21).

6. Aéronef (10) selon l'une quelconque des revendications 4 à 5,
**caractérisé en ce que** lorsque ladite structure longitudinale (20) comporte deux poutres longitudinales (21), une poutre longitudinale (21) et une poutre de liaison (24) constituent une seule et même pièce.

7. Aéronef (10) selon l'une quelconque des revendications 1 à 6,
**caractérisé en ce que** ledit fuselage (25) est fixé à ladite structure longitudinale (20) par l'intermédiaire de bielles (26).

8. Aéronef (10) selon l'une quelconque des revendications 1 à 7,
**caractérisé en ce qu'**au moins une voilure fixe (31) comporte quatre volets mobiles (33), deux volets mobiles (33) étant agencés de part et d'autre transversalement de ladite structure longitudinale (20).

9. Aéronef (10) selon la l'une quelconque des revendications 1 à 8,
**caractérisé en ce qu'**au moins une voilure fixe (31) comporte deux dérives verticales (35) munies d'au moins un volet mobile (36), lesdites dérives verticales (35) étant agencées respectivement à une extrémité libre de ladite voilure fixe (31).

10. Aéronef (10) selon l'une quelconque des revendications 1 à 9,
**caractérisé en ce que** lesdits rotors (41) sont alignés sur deux lignes longitudinales afin de limiter la création d'une traînée aérodynamique.

11. Aéronef (10) selon l'une quelconque des revendications 1 à 10,
**caractérisé en ce que** lesdits rotors (41) comportent un carénage (47), ledit carénage étant relié audit support (43) par un ou plusieurs bras de liaison (48).

12. Aéronef (10) selon la revendication 11,
**caractérisé en ce que** ledit carénage (47) de chaque rotor (41) comporte une pluralité de systèmes d'absorption d'énergie acoustique (49).

13. Aéronef (10) selon l'une quelconque des revendications 1 à 12,
**caractérisé en ce que** ladite au moins une hélice d'avancement (51) est agencée au-dessus de ladite voilure fixe (31).

14. Aéronef (10) selon l'une quelconque des revendications 1 à 13,
**caractérisé en ce que** ledit ensemble de propulsion (50) comporte deux hélices d'avancement (51) fixées à ladite structure longitudinale (20).

15. Aéronef (10) selon l'une quelconque des revendications 1 à 14,
**caractérisé en ce que** chaque moteur électrique (42,52) de ladite installation motrice est refroidi par air.

16. Aéronef (10) selon l'une quelconque des revendications 1 à 15,
**caractérisé en ce que** ladite installation motrice comporte au moins deux sources d'énergie électrique (61) indépendantes alimentant chaque moteur électrique (42,52), lesdites au moins deux sources d'énergie électrique (61) étant séparées et isolées l'une de l'autre de sorte qu'un incident se produisant sur une desdites sources d'énergie électrique (61) ne se propage pas à l'autre source d'énergie électrique (61).

17. Aéronef (10) selon l'une quelconque des revendications 1 à 16,
**caractérisé en ce que** lesdits rotors (41) sont agencés de sorte que deux rotors (41) adjacents sont contrarotatifs.

18. Aéronef (10) selon l'une quelconque des revendications 1 à 17,
**caractérisé en ce que** ledit premier plan (P1) est parallèle audit second plan (P2).

## Patentansprüche

1. Mehrrotoriges Luftfahrzeug (10) mit:
- einer Längsstruktur (20) mit zwei Längsenden,
- einem Rumpf (25), der an der Längsstruktur (20) befestigt ist,
- einem Satz fester Tragflächen (30), die mit zwei festen Flügeln (31) ausgestattet sind, die den überwiegenden Teil des Auftriebs erzeugen, den das Luftfahrzeug (10) während einer Reiseflugphase benötigt,
- einem Satz rotierender Tragflächen (40), der mit mindestens sechs Rotoren (41) versehen ist, die den überwiegenden Teil des Auftriebs erzeugen, den das Luftfahrzeug (10) während der Start- und der Landephase benötigt, wobei die Rotoren (41) jeweils auf einem Träger (43), der an einem festen Flügel (31) befestigt ist, so angeordnet sind, dass sie sich nicht vertikal über einem festen Flügel (31) befinden,
- einer Vortriebsbaugruppe (50) mit mindestens einem Vorschubpropeller (51),
- einem Antriebsaggregat mit mehreren Elektromotoren (42, 52) und mindestens einer elektrischen Energiequelle (61):
∘ einem Elektromotor (42, 52), der jeweils einen Rotor (41) oder einen Vorschubpropeller (51) antreibt,
∘ mindestens eine elektrische Energiequelle (61), die eine oder mehrere elektrische Energiespeichervorrichtungen (65) umfasst,
- einem System zur automatischen Steuerung (70) des Luftfahrzeugs (10), wobei einer der beiden festen Flügel (31) starr an dem vorderen Längsende der Längsstruktur (20) befestigt ist, wobei sich die Längsstruktur (20) hauptsächlich in einer ersten Ebene (P1) erstreckt,
**dadurch gekennzeichnet, dass** der andere der beiden festen Flügel (31) starr am hinteren Längsende der Längsstruktur befestigt ist und dass die Rotoren (41) in einer gleichen zweiten Ebene (P2) angeordnet sind, die sich von der ersten Ebene (P1) unterscheidet.

2. Luftfahrzeug (10) nach Anspruch 1,
**dadurch gekennzeichnet, dass** die Längsstruktur (20) zwei Längsträger (21) umfasst, die sich in der ersten Ebene (P1) erstrecken, und dass mindestens ein fester Flügel (31) an den Längsträgern (21) befestigt ist.

3. Luftfahrzeug (10) nach Anspruch 1,
**dadurch gekennzeichnet, dass** die Längsstruktur (20) einen starren Kasten (23) umfasst, der sich in der ersten Ebene (P1) erstreckt, wobei mindestens ein fester Flügel (31) an dem starren Kasten (23) befestigt ist.

4. Luftfahrzeug (10) nach einem der Ansprüche 1 bis 3,
**dadurch gekennzeichnet, dass** die Längsstruktur (20) zwei Verbindungsträger (24) umfasst, die in Bezug auf die erste Ebene (P1) geneigt sind, und dass einer der beiden festen Flügel (31) an einem ersten Ende der Verbindungsträger (24) befestigt und in Bezug auf die erste Ebene (P1) vertikal versetzt ist.

5. Luftfahrzeug (10) nach Anspruch 4,
**dadurch gekennzeichnet, dass**, wenn die Längsstruktur (20) zwei Längsträger (21) umfasst, ein Verbindungsträger (24) starr an einem Längsträger (21) befestigt ist und die Längsstruktur (20) einen Querträger (22) umfasst, der die beiden Längsträger (21) verbindet.

6. Luftfahrzeug (10) nach einem der Ansprüche 4 bis 5,
**dadurch gekennzeichnet, dass**, wenn die Längsstruktur (20) zwei Längsträger (21) umfasst, ein Längsträger (21) und ein Verbindungsträger (24) ein einziges Teil bilden.

7. Luftfahrzeug (10) nach einem der Ansprüche 1 bis 6,
**dadurch gekennzeichnet, dass** der Rumpf (25) mittels Verbindungsstangen (26) an der Längsstruktur (20) befestigt ist.

8. Luftfahrzeug (10) nach einem der Ansprüche 1 bis 7,
**dadurch gekennzeichnet, dass** mindestens ein fester Flügel (31) vier bewegliche Klappen (33) aufweist, wobei zwei bewegliche Klappen (33) in Querrichtung auf beiden Seiten der Längsstruktur (20) angeordnet sind.

9. Luftfahrzeug (10) nach einem der Ansprüche 1 bis 8,
**dadurch gekennzeichnet, dass** mindestens ein fester Flügel (31) zwei vertikale Flossen (35) aufweist, die mit mindestens einer beweglichen Klappe (36) versehen sind,
und dass die vertikalen Flossen (35) jeweils an einem freien Ende des festen Flügels (31) angeordnet sind.

10. Luftfahrzeug (10) nach einem der Ansprüche 1 bis 9,
**dadurch gekennzeichnet, dass** die Rotoren (41) auf zwei Längslinien ausgerichtet sind, um die Erzeugung eines aerodynamischen Widerstands zu begrenzen.

11. Luftfahrzeug (10) nach einem der Ansprüche 1 bis 10,
**dadurch gekennzeichnet, dass** die Rotoren (41) eine Verkleidung (47) aufweisen, und dass die Verkleidung durch einen oder mehrere Verbindungsarme (48) mit dem Träger (43) verbunden ist.

12. Luftfahrzeug (10) nach Anspruch 11,
**dadurch gekennzeichnet, dass** die Verkleidung (47) jedes Rotors (41) eine Mehrzahl von akustischen Energieabsorptionssystemen (49) aufweist.

13. Luftfahrzeug (10) nach einem der Ansprüche 1 bis 12,
**dadurch gekennzeichnet, dass** der mindestens eine Vorschubpropeller (51) oberhalb des festen Flügels (31) angeordnet ist.

14. Luftfahrzeug (10) nach einem der Ansprüche 1 bis 13,
**dadurch gekennzeichnet, dass** die Vortriebsbaugruppe (50) zwei an der Längsstruktur (20) befestigte Vorschubpropeller (51) umfasst.

15. Luftfahrzeug (10) nach einem der Ansprüche 1 bis 14,
**dadurch gekennzeichnet, dass** jeder Elektromotor (42, 52) des Antriebsaggregats luftgekühlt ist.

16. Luftfahrzeug (10) nach einem der Ansprüche 1 bis 15,
**dadurch gekennzeichnet, dass** das Antriebsaggregat mindestens zwei unabhängige elektrische Energiequellen (61) umfasst, die jeden Elektromotor (42, 52) versorgen, wobei die mindestens zwei elektrischen Energiequellen (61) getrennt und voneinander isoliert sind, so dass sich ein Zwischenfall, der an einer der elektrischen Energiequellen (61) auftritt, nicht auf die andere elektrische Energiequelle (61) überträgt.

17. Luftfahrzeug (10) nach einem der Ansprüche 1 bis 16,
**dadurch gekennzeichnet, dass** die Rotoren (41) so angeordnet sind, dass zwei benachbarte Rotoren (41) gegenläufig rotieren.

18. Luftfahrzeug (10) nach einem der Ansprüche 1 bis 17,
**dadurch gekennzeichnet, dass** die erste Ebene (P1) parallel zu der zweiten Ebene (P2) ist.

## Claims

1. Multi-rotor aircraft (10) comprising:
- a longitudinal structure (20) comprising two longitudinal ends,
- a fuselage (25) secured to said longitudinal structure (20),
- a set of stationary aerofoils (30) provided with two stationary wings (31) which predominately generate the lift necessary for said aircraft (10) during a cruising phase,
- a set of rotating aerofoils (40) provided with at least six rotors (41) which predominately generate the lift necessary for said aircraft (10) during the take-off and landing phases, said rotors (41) each being arranged on a support (43) secured to a stationary wing (31) and so as not to be located vertically relative to a stationary wing (31),
- a propulsion unit (50) comprising at least one advancement propeller (51)
- a power plant comprising a plurality of electric motors (42,52) and at least one electrical energy source (61):
∘ an electric motor (42, 52) driving a rotor (41) or an advancement propeller (51),
∘ at least one electrical energy source (61) comprising one or more electrical energy storage devices (65),
- an automatic piloting system (70) of said aircraft (10),
one of said two stationary wings (31) being rigidly secured to the front longitudinal end of said longitudinal structure (20), said longitudinal structure (20) extending mainly in a first plane (P1),
**characterised in that** the other of said two stationary wings (31) is rigidly secured to the rear longitudinal end of said longitudinal structure and **in that** said rotors (41) are arranged in the same second plane (P2) which is distinct from said first plane (P1).

2. Aircraft (10) according to claim 1, **characterised in that** said longitudinal structure (20) comprises two longitudinal beams (21) extending in said first plane (P1), at least one stationary wing (31) being secured to said longitudinal beams (21).

3. Aircraft (10) according to claim 1, **characterised in that** said longitudinal structure (20) comprises a rigid box (23) extending in said first plane (P1), at least one stationary wing (31) being secured to said rigid box (23).

4. Aircraft (10) according to any of claims 1 to 3, **characterised in that** said longitudinal structure (20) comprises two connecting beams (24) which are inclined relative to said first plane (P1) and one of said two stationary wings (31) is secured to a first end of said connecting beams (24) and is vertically offset relative to said first plane (P1).

5. Aircraft (10) according to claim 4, **characterised in that**, when said longitudinal structure (20) comprises two longitudinal beams (21), a connecting beam (24) is rigidly secured to a longitudinal beam (21) and said longitudinal structure (20) comprises a transverse beam (22) connecting said two longitudinal beams (21).

6. Aircraft (10) according to either claim 4 or claim 5, **characterised in that**, when said longitudinal structure (20) comprises two longitudinal beams (21), a longitudinal beam (21) and a connecting beam (24) constitute one and the same part.

7. Aircraft (10) according to any of claims 1 to 6, **characterised in that** said fuselage (25) is secured to said longitudinal structure (20) by means of connecting rods (26).

8. Aircraft (10) according to any of claims 1 to 7, **characterised in that** at least one stationary wing (31) comprises four movable flaps (33), two movable flaps (33) being arranged on either side transversely of said longitudinal structure (20).

9. Aircraft (10) according to any of claims 1 to 8, **characterised in that** at least one stationary wing (31) comprises two vertical fins (35) provided with at least one movable flap (36), said vertical fins (35) each being arranged at a free end of said stationary wing (31).

10. Aircraft (10) according to any of claims 1 to 9, **characterised in that** said rotors (41) are aligned on two longitudinal lines in order to limit the creation of aerodynamic drag.

11. Aircraft (10) according to any of claims 1 to 10, **characterised in that** said rotors (41) comprise a duct (47), said duct being connected to said support (43) by one or more connecting arms (48).

12. Aircraft (10) according to claim 11, **characterised in that** said duct (47) of each rotor (41) comprises a plurality of acoustic-energy absorption systems (49).

13. Aircraft (10) according to any of claims 1 to 12, **characterised in that** said at least one advancement propeller (51) is arranged above said stationary wing (31).

14. Aircraft (10) according to any of claims 1 to 13, **characterised in that** said propulsion unit (50) comprises two advancement propellers (51) secured to said longitudinal structure (20).

15. Aircraft (10) according to any of claims 1 to 14, **characterised in that** each electric motor (42, 52) of said power plant is air-cooled.

16. Aircraft (10) according to any of claims 1 to 15, **characterised in that** said power plant comprises at least two independent electrical energy sources (61) supplying each electric motor (42,52), said at least two electrical energy sources (61) being separated and isolated from one another such that an incident occurring on one of said electrical energy sources (61) does not propagate to the other electrical energy source (61).

17. Aircraft (10) according to any of claims 1 to 16, **characterised in that** said rotors (41) are arranged such that two adjacent rotors (41) are counter-rotating.

18. Aircraft (10) according to any of claims 1 to 17, **characterised in that** said first plane (P1) is parallel to said second plane (P2).
